# EUROPÄISCHE PATENTANMELDUNG

(11) **EP 2 595 450 A2**
(43) Veröffentlichungstag der Anmeldung: **22.05.2013**
(21) Anmeldenummer: 12382444.3
(22) Anmeldetag: 12.11.2012
(51) Int. Cl.: H05B 6/12

(54) **Kochfeldvorrichtung**

(30) Priorität: 16.11.2011 ES 201131850
(71) Anmelder: BSH Electrodomésticos España, S.A., 31620 Huarte (Navarra) (ES)
(72) Erfinder: Arenas Jimenez, Beatriz, 50196 Zaragoza (ES); Ceamanos Gaya, Jesús, 50016 Zaragoza (ES); Dionisio Micolau, Diego, 50013 Zaragoza (ES); Martín Gómez, Dámaso, Zaragoza (ES); Martínez Bermejo, Armando, 50820 San Juan de Mozarrifar Zaragoza (ES); Torrubia Marco, Demetrio, Zaragoza (ES)

(57) **Zusammenfassung**

Die Erfindung geht aus von einer Kochfeldvorrichtung (10), insbesondere einer Induktionskochfeldvorrichtung, mit zumindest einer Basiseinheit (12), die in zumindest einem Betriebszustand dazu vorgesehen ist, zumindest ein Heizelement (14) zu tragen und zumindest eine Kochfeldelektronik (16) zu halten.

Um eine gattungsgemäße Vorrichtung mit verbesserten Eigenschaften hinsichtlich einer Montage bereitzustellen wird vorgeschlagen, dass die Basiseinheit (12) als ein Verbundbauteil ausgebildet ist.

## Beschreibung

Die Erfindung geht aus von einer Kochfeldvorrichtung nach dem Oberbegriff des Anspruchs 1.

Es ist bereits eine Kochfeldvorrichtung, insbesondere eine Induktionskochfeldvorrichtung, mit zumindest einer Basiseinheit, die in zumindest einem Betriebszustand dazu vorgesehen ist, zumindest ein Heizelement zu tragen und zumindest eine Kochfeldelektronik zu halten, vorgeschlagen worden.

Die Aufgabe der Erfindung besteht insbesondere darin, eine gattungsgemäße Vorrichtung mit verbesserten Eigenschaften hinsichtlich einer Montage bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Kochfeldvorrichtung, insbesondere einer Induktionskochfeldvorrichtung, mit zumindest einer Basiseinheit, die in zumindest einem Betriebszustand dazu vorgesehen ist, zumindest ein Heizelement zu tragen und zumindest eine Kochfeldelektronik zu halten.

Es wird vorgeschlagen, dass die Basiseinheit als ein Verbundbauteil ausgebildet ist. Unter einer "Basiseinheit" soll insbesondere eine Einheit verstanden werden, die in dem Betriebszustand als eine Basis, vorzugsweise als ein Fundament, insbesondere als eine Grundlage, zu einem Aufbau zumindest eines Bauteils, insbesondere zu einer Montage zumindest eines Kochfeldbestandteils, vorgesehen ist. Insbesondere ist die Basiseinheit in dem Betriebszustand dazu vorgesehen, eine Anordnung und/oder Befestigung weiterer Elemente, insbesondere des Heizelements und der Kochfeldelektronik, an der Basiseinheit zu ermöglichen. Vorzugsweise ist die Basiseinheit in dem Betriebszustand dazu vorgesehen, zumindest einen Großteil einer Gewichtskraft der weiteren an der Basiseinheit angeordneten und/oder befestigten weiteren Elemente zu tragen und/oder zu halten. Insbesondere ist die Basiseinheit in dem Betriebszustand dazu vorgesehen, eine Gewichtskraft von mehr als 10 N, vorzugsweise von mehr als 50 N, insbesondere von mehr als 100 N und insbesondere von mehr als 150 N zu tragen und/oder zu halten. Vorzugsweise ist die Basiseinheit als eine von einem Gehäuse eines Kochfelds abweichende Einheit ausgebildet. Unter einem "Großteil einer Gewichtskraft" soll insbesondere ein Anteil von mehr als 80 %, vorzugsweise von mehr als 90 % und insbesondere von mehr als 95 % eines Betrags der Gewichtskraft verstanden werden. Unter einem "Betriebszustand" soll insbesondere ein montierter Zustand verstanden werden. Insbesondere ist in dem Betriebszustand zumindest ein weiteres Bauteil, insbesondere ein Kochfeld, zu dessen Aufbau die Basiseinheit vorgesehen ist, in einem betriebsbereiten, insbesondere funktionstüchtig ausgerichteten, Zustand. Unter einem "Heizelement" soll insbesondere ein Element verstanden werden, das dazu vorgesehen ist, in zumindest einem Betriebszustand, vorzugsweise elektrische, Energie an ein Gargeschirr, vorzugsweise durch zumindest eine Kochfeldplatte hindurch zu übertragen. Insbesondere ist das Heizelement dazu vorgesehen, in zumindest einem Betriebszustand, in dem das Heizelement an eine Versorgungselektronik angeschlossen ist, eine Leistung von zumindest 100 W, insbesondere zumindest 500 W, vorteilhaft zumindest 1000 W, vorzugsweise zumindest 2000 W zu übertragen. Insbesondere ist das Heizelement als ein Induktionsheizelement ausgebildet. Unter einem "Induktionsheizelement" soll insbesondere ein gewickelter elektrischer Leiter verstanden werden, vorzugsweise in Form einer Kreisscheibe, der in zumindest einem Betriebszustand von hochfrequentem Wechselstrom durchflossen ist. Insbesondere ist das Induktionsheizelement dazu vorgesehen, elektrische Energie in ein magnetisches Wechselfeld umzuwandeln, das dazu vorgesehen ist, in einem metallischen, vorzugsweise zumindest teilweise ferromagnetischen, Heizmittel, insbesondere einem Gargeschirr, Wirbelströme und/oder Ummagnetisierungseffekte hervorzurufen, die in Wärme umgewandelt werden. Vorzugsweise ist das Induktionsheizelement dazu vorgesehen, eine Erwärmung des Heizmittels zu verursachen. Vorzugsweise ist das Induktionsheizelement dazu vorgesehen, in dem Betriebsmodus elektrische Energie in elektromagnetische Feldenergie zu wandeln, die in einem geeigneten Heizmittel letztendlich in Wärme gewandelt wird. Unter einer "Kochfeldelektronik" soll insbesondere eine Gesamtheit an elektrischen und/oder elektronischen Elementen und/oder Einheiten verstanden werden, die zu einem Betrieb zumindest eines Kochfelds notwendig sind. Beispielsweise umfasst die Kochfeldelektronik zumindest eine Gebläseeinheit, zumindest eine Leistungselektronikeinheit zu einer Versorgung des Heizelements, zumindest eine Steuerelektronikeinheit zu einer Steuerung des Heizelements und zumindest ein Leitungselement. Unter einem "Leitungselement" soll insbesondere ein Element verstanden werden, das zumindest einen Draht aufweist. Unter einem "Draht" soll insbesondere zumindest ein länglicher, vorteilhaft unter Einfluss einer geringen Kraft bieg- und/oder verlegbarer, elektrischer Leiter verstanden werden, der vorzugsweise von zumindest einer Isolationshülle umgeben ist. Insbesondere ist der elektrische Leiter von mehreren Drähten, alternativ von einem einzelnen Draht, gebildet. Unter einem "Verbundbauteil" soll insbesondere ein Bauteil verstanden werden, das zumindest zwei Elemente, insbesondere zumindest ein Basiselement und zumindest ein weiteres Basiselement, umfasst, wobei die Elemente stoffschlüssig und/oder über zumindest ein Verbindungsmittel miteinander verbunden sind, wobei eine Trennung der Elemente, vorzugsweise lediglich, unter einer zumindest teilweisen Zerstörung und/oder Verlust einer Funktionstüchtigkeit von zumindest einem der Elemente und/oder von zumindest einem der Verbindungsmittel möglich ist. Insbesondere sind die Elemente in einem funktionstüchtigen Zustand unlösbar, insbesondere nicht zumindest im Wesentlichen zerstörungsfrei trennbar, miteinander verbunden. Insbesondere ist zumindest eines der Elemente und/oder zumindest ein die Elemente in dem Betriebszustand verbindendes Verbindungsmittel nach einer, vorzugsweise gewaltsamen, Trennung der Elemente in einem funktionsuntüchtigen Zustand. Insbesondere umfasst das Verbundbauteil zumindest ein Basiselement und zumindest ein weiteres Basiselement, die stoffschlüssig miteinander verbunden sind und/oder von denen nach einer Trennung der Elemente zumindest eines der Elemente zumindest teilweise zerstört ist. Beispielsweise könnte das Basiselement das weitere Basiselement zumindest teilweise, insbesondere komplett, umgeben. Dabei könnte das weitere Basiselement in das Basiselement eingegossen sein. Beispielsweise könnte ein, vorzugsweise netzartig angeordnetes, insbesondere aus Metallfasern ausgebildetes, erstes Bauteil in ein, vorzugsweise aus Kunststoff ausgebildetes, insbesondere aus Harz ausgebildetes, zweites Bauteil eingebettet sein. Insbesondere ist das Verbundbauteil als ein Schichtbauteil ausgebildet. Vorzugsweise weist das als Schichtbauteil ausgebildete Verbundbauteil zumindest zwei Schichten auf, die insbesondere von dem Basiselement und dem weiteren Basiselement gebildet sind. Unter der Wendung, dass zumindest zwei Elemente nicht "zumindest im Wesentlichen zerstörungsfrei trennbar" ausgebildet sind, soll insbesondere verstanden werden, dass die Elemente nach einer Trennung der Elemente zu einem Massenanteil von mehr als 1 %, vorzugsweise von mehr als 2 % und insbesondere von mehr als 5 % zerstört sind. Insbesondere ist nach der Trennung zumindest ein Element und/oder ein die Elemente verbindendes Mittel zu einem Massenanteil von mehr als 30 %, vorzugsweise von mehr als 40 % und insbesondere von mehr als 50 % zerstört und/oder insbesondere in einem funktionsuntüchtigen Zustand. Unter einem "zumindest teilweise zerstörten" Element soll insbesondere ein Element verstanden werden, das zu einem Massenanteil von mehr als 30 %, vorzugsweise von mehr als 40 % und insbesondere von mehr als 50 % zerstört ist und/oder sich insbesondere in einem funktionsuntüchtigen Zustand befindet. Unter "vorgesehen" soll insbesondere speziell ausgelegt und/oder ausgestattet verstanden werden.

Durch eine erfindungsgemäße Ausgestaltung kann vorteilhaft eine einfache Montage erreicht werden. Durch eine Ausbildung der Basiseinheit als das Verbundbauteil kann vorteilhaft eine hohe Stabilität sowie ein hoher Funktionsumfang des Verbundbauteils erreicht werden. Weiterhin kann durch eine Ausbildung als Verbundbauteil eine leichte und preiswerte Basiseinheit erreicht werden. Zudem kann vorteilhaft eine einfache und flexible Montage von Komponenten der Kochfeldvorrichtung erreicht werden, wodurch zusätzlich eine preiswerte Ausgestaltung erreicht werden kann, insbesondere können in einem Vergleich zu einem herkömmlichen Montagevorgang Kosten, insbesondere Montagekosten, eingespart werden.

Ferner wird vorgeschlagen, dass das Verbundbauteil zumindest teilweise aus Kunststoff ausgebildet ist. Unter der Wendung, dass das "Verbundbauteil zumindest teilweise aus Kunststoff ausgebildet" ist, soll insbesondere verstanden werden, dass das Verbundbauteil, insbesondere die Basiseinheit, zumindest ein Basiselement aufweist, das zumindest teilweise aus zumindest einem, insbesondere genau einem, Kunststoff, insbesondere einer Kunststoffmischung, ausgebildet ist. Alternativ könnte das Basiselement zumindest teilweise aus einem Faserverbundwerkstoff, beispielsweise aus einem Glasfaserverbundwerkstoff, ausgebildet sein. Vorzugsweise weist das Basiselement eine Materialstärke mit einem Betrag von mehr als 0,5 mm, vorzugsweise von mehr als 0,8 mm und insbesondere von mehr als 1 mm auf. Insbesondere weist die Materialstärke des Basiselements einen Betrag von weniger als 4 mm, vorzugsweise von weniger als 3 mm und insbesondere von weniger als 2,5 mm auf. Zusätzlich zu dem aus Kunststoff ausgebildeten Basiselement könnte das Verbundbauteil noch zumindest ein zumindest teilweise aus einem von einem Kunststoff abweichenden Material ausgebildetes weiteres Element, insbesondere das weitere Basiselement aufweisen. Insbesondere weist die Basiseinheit das Basiselement auf, das zumindest teilweise aus Kunststoff ausgebildet ist. Vorzugsweise weist das Basiselement zumindest ein Verstärkungselement auf, das dazu vorgesehen ist, das Basiselement zu verstärken, insbesondere eine Stabilität des Basiselements zu erhöhen. Insbesondere ist das Verstärkungselement dazu vorgesehen, das Basiselement zu der Kochfeldelektronik zu beabstanden. Vorzugsweise weist das Verstärkungselement eine Verstärkungselementhöhe von zumindest im Wesentlichen 4 mm auf. Unter der Wendung, dass das "Basiselement zumindest teilweise aus Kunststoff ausgebildet" ist, soll insbesondere verstanden werden, dass das Basiselement zu einem Massenanteil von mehr als 70 %, vorzugsweise von mehr als 80 % und insbesondere von mehr als 90 % aus Kunststoff ausgebildet ist. Durch eine erfindungsgemäße Ausgestaltung kann vorteilhaft ein leichtes, flexibles und preisgünstiges Material zu einem Aufbau der Kochfeldvorrichtung verwendet werden.

Zudem wird vorgeschlagen, dass die Basiseinheit zumindest ein weiteres Basiselement aufweist, das zumindest teilweise als ein Schirmelement ausgebildet ist. Insbesondere weist das weitere Basiselement eine Materialstärke mit einem Betrag von mehr als 0,1 mm, vorzugsweise von mehr als 0,2 mm und insbesondere von mehr als 0,5 mm auf. Insbesondere nimmt die Materialstärke des weiteren Basiselements einen Betrag von weniger als 4 mm, vorzugsweise von weniger als 3 mm und insbesondere von weniger als 2 mm an. Insbesondere nimmt die Materialstärke des weiteren Basiselements einen Betrag in einem Bereich von 0,5 mm bis 2 mm an. Vorzugsweise ist das weitere Basiselement, insbesondere das Schirmelement, zumindest teilweise als ein Trägerelement ausgebildet. Insbesondere ist das weitere Basiselement dazu vorgesehen, das Basiselement zumindest teilweise zu stabilisieren. Vorzugsweise ist das weitere Basiselement zumindest teilweise aus Metall, insbesondere aus Aluminium, ausgebildet. Insbesondere ist das weitere Basiselement in dem Betriebszustand zumindest zu einem Großteil zwischen dem Basiselement und dem zumindest einen Heizelement angeordnet. Unter einem "Schirmelement" soll insbesondere ein Element verstanden werden, das dazu vorgesehen ist, zumindest eine Übertragung von Wärmestrahlung und/oder von elektromagnetischer Strahlung über eine bestimmte Grenze hinweg zumindest im Wesentlichen zu verhindern. Insbesondere deckt das Schirmelement eine Grenze von zumindest 10 cm², insbesondere zumindest 100 cm², vorteilhaft zumindest 300 cm², vorzugsweise zumindest 1000 cm² ab. Insbesondere ist das Schirmelement dazu vorgesehen, Wärmestrahlung und/oder elektromagnetische Strahlung zumindest im Wesentlichen zu absorbieren. Vorzugsweise ist das Schirmelement dazu vorgesehen, elektromagnetische Strahlung in einem Frequenzbereich zwischen 10 Hz und 150 kHz zumindest im Wesentlichen zu absorbieren. Vorzugsweise ist das Schirmelement dazu vorgesehen, Wärmestrahlung und/oder elektromagnetische Strahlung, die insbesondere von zumindest einem Heizelement selbst, alternativ und/oder zusätzlich von einem Gargeschirr und/oder einer Kochfeldplatte über dem Heizelement emittiert ist, zumindest im Wesentlichen zu absorbieren. Insbesondere ist das Schirmelement dazu vorgesehen, Wärmestrahlung und/oder elektromagnetische Strahlung zu einem Anteil von mehr als 90 %, vorteilhaft von mehr als 95 %, insbesondere von mehr als 98 % und besonders bevorzugt komplett zu absorbieren. Vorzugsweise ist das Schirmelement von zumindest einem Blech gebildet. Insbesondere ist das Schirmelement zumindest im Wesentlichen formstabil ausgebildet. Vorzugsweise ist es denkbar, dass das Schirmelement eine schalenartige Ausgestaltung aufweist. Unter der Wendung, dass das "weitere Basiselement zumindest teilweise als ein Schirmelement ausgebildet" ist, soll insbesondere verstanden werden, dass das weitere Basiselement neben einer Funktion als Schirmelement zusätzlich zumindest eine weitere Funktion aufweist. Unter der Wendung, dass das "weitere Basiselement zumindest teilweise als ein Trägerelement ausgebildet" ist, soll insbesondere verstanden werden, dass das weitere Basiselement neben einer Funktion als Trägerelement zusätzlich zumindest eine weitere Funktion, insbesondere eine Funktion als Schirmelement, aufweist. Unter der Wendung, dass das "weitere Basiselement dazu vorgesehen ist, das Basiselement zumindest teilweise zu stabilisieren", soll insbesondere verstanden werden, dass das weitere Basiselement dazu vorgesehen ist, einen Betrag einer Festigkeit und/oder einer Härte des Basiselements um mehr als 5 %, vorzugsweise um mehr als 10 % und insbesondere um mehr als 20 % zu erhöhen. Unter der Wendung, dass das weitere "Basiselement zumindest teilweise aus Metall ausgebildet" ist, soll insbesondere verstanden werden, dass das weitere Basiselement zu einem Massenanteil von mehr als 70 %, vorzugsweise von mehr als 80 % und insbesondere von mehr als 90 % aus einem Metall und/oder aus zumindest zwei Metallen, insbesondere einer Metalllegierung, ausgebildet ist. Durch eine derartige Ausgestaltung kann vorteilhaft ein empfindlicher Teil der Kochfeldvorrichtung, insbesondere die Kochfeldelektronik, abgeschirmt werden, insbesondere gegen elektromagnetische Strahlung und/oder Wärmestrahlung, wodurch eine lange Funktionstüchtigkeit der Kochfeldelektronik erreicht werden kann.

Ferner wird vorgeschlagen, dass das Basiselement und das weitere Basiselement in dem Betriebszustand zueinander beabstandet sind. Insbesondere sind das Basiselement und das weitere Basiselement aneinander befestigt. Beispielsweise könnten das Basiselement und das weitere Basiselement mittels zumindest einer Bolzenverbindung, zumindest einer Nietenverbindung, zumindest einer Schweißverbindung, zumindest einer thermischen Bondingverbindung und/oder zumindest einer Utraschall-Bondingverbindung aneinander befestigt sein. Insbesondere weist das Basiselement zumindest ein Abstandselement auf, das dazu vorgesehen ist, das Basiselement und das weitere Basiselement zueinander zu beabstanden. Insbesondere weisen das Basiselement und das weitere Basiselement einen Abstand von zumindest im Wesentlichen 1 mm auf. Vorzugsweise bilden das Basiselement und das weitere Basiselement zumindest eine Kontaktfläche aus, deren Betrag einen Wert von weniger als 10 %, vorzugsweise von weniger als 8 % und insbesondere von weniger als 5 % eines Betrags einer Flächenerstreckung eines kleinsten der beiden Elemente aufweist. Insbesondere ist ein Anteil von mehr als 90 %, vorzugsweise von mehr als 92 % und insbesondere von mehr als 95 % eines Betrags einer jeweiligen Flächenerstreckung des Basiselements und des weiteren Basiselements freitragend, insbesondere frei von einem Kontakt zu einem jeweils anderen der beiden Basiselemente, angeordnet. Unter "zumindest im Wesentlichen" soll insbesondere verstanden werden, dass eine Abweichung von einem vorgegebenen Wert insbesondere weniger als 25 %, vorzugsweise weniger als 10 % und besonders bevorzugt weniger als 5 % des vorgegebenen Werts beträgt. Durch eine derartige Ausgestaltung kann vorteilhaft eine Belüftung zwischen dem Basiselement und dem weiteren Basiselement erreicht werden, wodurch eine geringe Übertragung von Wärmestrahlung erreicht und eine Funktionstüchtigkeit der beiden Elemente über einen längeren Zeitraum aufrechterhalten werden kann.

Zudem wird vorgeschlagen, dass die Basiseinheit zumindest eine Verbundbauteilausnehmung aufweist, die dazu vorgesehen ist, eine elektrische Kontaktierung des Heizelements und der Kochfeldelektronik zu ermöglichen. Insbesondere ist die Verbundbauteilausnehmung als zumindest eine offene Verbundbauteilausnehmung und/oder als zumindest eine geschlossene Verbundbauteilausnehmung ausgebildet. Alternativ könnte eine elektrische Kontaktierung des Heizelements und der Kochfeldelektronik um das Verbundbauteil, insbesondere um die Basiseinheit, herum geführt sein. Unter einer "offenen Verbundbauteilausnehmung" soll insbesondere ein Einschnitt und/oder eine Einbuchtung in zumindest einer seitlichen Begrenzungslinie des Verbundbauteils, insbesondere des Basiselements und des weiteren Basiselements, verstanden werden. Unter einer "offenen Verbundbauteilausnehmung" soll insbesondere ein Loch in dem Verbundbauteil, insbesondere in dem Basiselement und dem weiteren Basiselement, verstanden werden. Durch eine derartige Ausgestaltung kann vorteilhaft eine einfache Kontaktierung des Heizelements und der Kochfeldelektronik erreicht werden, bei welcher eine Überlagerung von Leitungselementen und eine damit verbundene Beeinflussung vermieden werden können.

Weiterhin wird vorgeschlagen, dass die Basiseinheit zumindest ein Befestigungselement aufweist, das dazu vorgesehen ist, eine separate Befestigung zumindest eines Gehäuses und zumindest einer Kochfeldplatte an der Basiseinheit zu ermöglichen. Insbesondere ist das Basiselement zumindest teilweise als das Befestigungselement ausgebildet. Insbesondere weist das Befestigungselement zumindest ein Befestigungsmittel auf, das dazu vorgesehen ist, in dem Betriebszustand mit einem zu dem Befestigungsmittel korrespondierenden weiteren Befestigungsmittel zusammenzuwirken. Vorzugsweise ist das Befestigungsmittel als eine Ausnehmung in dem Befestigungselement ausgebildet. Insbesondere umfasst das Befestigungsmittel ein Gewinde. Vorzugsweise ist das weitere Befestigungsmittel als eine Schraube ausgebildet. Alternativ könnte das weitere Befestigungsmittel als eine Niete, ein Bolzen und/oder ein Stift ausgebildet sein. Insbesondere sind das Gehäuse und die Kochfeldplatte unabhängig, insbesondere getrennt, voneinander an der Basiseinheit befestigbar, insbesondere montierbar. Vorzugsweise ist eine Reihenfolge einer Befestigung, insbesondere einer Montage, des Gehäuses und der Kochfeldplatte an der Basiseinheit variabel. Beispielsweise könnte zunächst das Gehäuse und zu einem späteren Zeitpunkt die Kochfeldplatte an der Basiseinheit befestigt, insbesondere montiert, sein. Alternativ könnte zunächst die Kochfeldplatte und zu einem späteren Zeitpunkt das Gehäuse an der Basiseinheit befestigt, insbesondere montiert, sein. Unter der Wendung, dass das "Basiselement zumindest teilweise als das Befestigungselement ausgebildet" ist, soll insbesondere verstanden werden, dass das Basiselement neben einer Funktion als Befestigungselement zusätzlich noch zumindest eine weitere Funktion aufweist. Durch eine derartige Ausgestaltung kann vorteilhaft eine einfache, von einer Reihenfolge einer Montage des Gehäuses und der Kochfeldplatte unabhängige Montage erreicht werden. Zudem können vorteilhaft alle Bauteile unabhängig voneinander montiert und, beispielsweise zu Reparaturzwecken, entfernt werden.

Ferner wird ein Verfahren zu einer Montage einer erfindungsgemäßen Kochfeldvorrichtung vorgeschlagen, wobei in einem ersten Verfahrensschritt das Basiselement und das weitere Basiselement aneinander montiert werden. Insbesondere wird zunächst die Basiseinheit, insbesondere das Verbundbauteil, montiert. Durch eine derartige Ausgestaltung kann vorteilhaft eine montierfertige Basiseinheit für eine nachfolgende einfache Montage bereitgestellt werden.

Zudem wird vorgeschlagen, dass in einem weiteren Verfahrensschritt das Heizelement und/oder die Kochfeldelektronik an der Basiseinheit montiert werden. Insbesondere werden das Heizelement und/oder die Kochfeldelektronik nach einer Montage der Basiseinheit, insbesondere nach einem vorhergehenden Verfahrensschritt zu einer Montage der Basiseinheit, an der montierten Basiseinheit montiert. Vorzugsweise ist eine Reihenfolge einer Montage des Heizelements und der Kochfeldelektronik an der Basiseinheit variabel. Beispielsweise könnte zunächst die Kochfeldelektronik und zu einem späteren Zeitpunkt das Heizelement an der Basiseinheit montiert werden. Alternativ könnte zunächst das Heizelement und zu einem späteren Zeitpunkt die Kochfeldelektronik an der Basiseinheit montiert werden. Durch eine derartige Ausgestaltung kann vorteilhaft eine flexible Montage der Kochfeldvorrichtung erreicht werden.

Weiterhin wird vorgeschlagen, dass nach einer Montage des Heizelements und/oder der Kochfeldelektronik an der Basiseinheit das Gehäuse und/oder die Kochfeldplatte an der Basiseinheit montiert werden. Beispielsweise könnte zunächst die Kochfeldelektronik, anschließend das Gehäuse, daraufhin das Heizelement und danach die Kochfeldplatte an der Basiseinheit montiert werden. Alternativ könnte zunächst das Heizelement, anschließend die Kochfeldplatte, daraufhin die Kochfeldelektronik und danach das Gehäuse an der Basiseinheit montiert werden. Insbesondere wird zunächst die Kochfeldelektronik sowie das Heizelement an der Basiseinheit montiert und anschließend wird das Gehäuse sowie die Kochfeldplatte an der Basiseinheit montiert. Durch eine derartige Ausgestaltung kann vorteilhaft die Kochfeldvorrichtung in einer simplen, flexiblen Weise montiert werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Kochfeldvorrichtung in einem Zustand während einer Montage in einer schematischen perspektivischen Ansicht von unten,
- Fig. 2: die erfindungsgemäße Kochfeldvorrichtung in einem weiteren Zustand während der Montage in einer schematischen perspektivischen Ansicht von unten,
- Fig. 3: die erfindungsgemäße Kochfeldvorrichtung in einem weiteren Zustand während der Montage in einer schematischen perspektivischen Ansicht von oben,
- Fig. 4: einen Schnitt durch die Linie IV-IV aus Fig. 1,
- Fig. 5: die erfindungsgemäße Kochfeldvorrichtung in einem weiteren Zustand während der Montage in einer schematischen Seitenansicht und
- Fig. 6: einen Schnitt durch die Linie VI-VI aus Fig. 1, wobei in einem Unterschied zu Fig. 1 ein fertig montiertes Kochfeld mit einer fertig montierten, in einer Ausrichtung eines Betriebszustands befindlichen Kochfeldvorrichtung gezeigt ist.

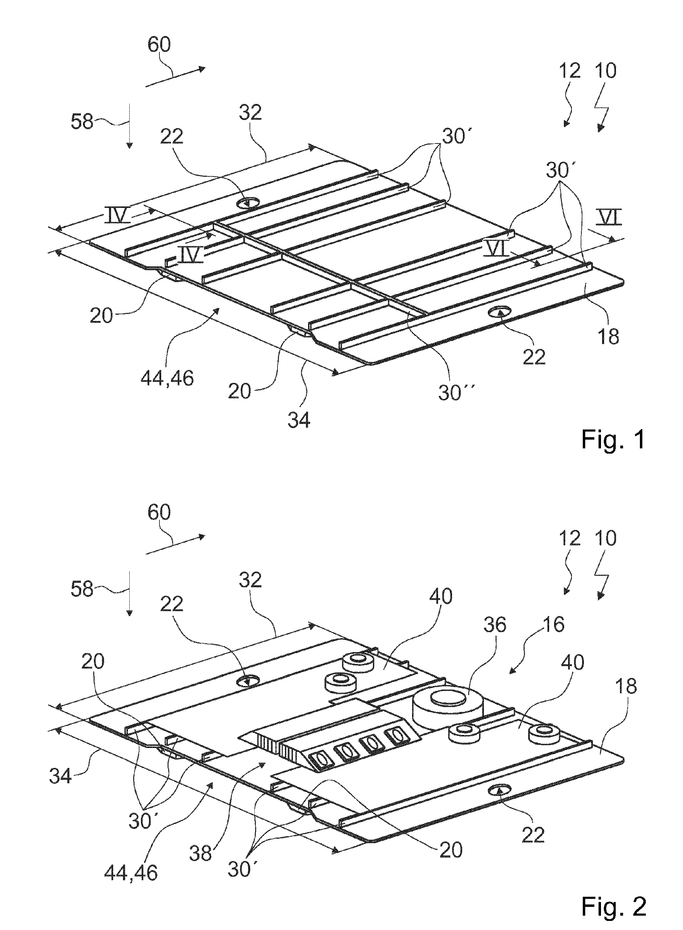

Fig. 1 zeigt eine erfindungsgemäße Kochfeldvorrichtung 10, die als eine Induktionskochfeldvorrichtung ausgebildet ist, in einem Zustand während einer Montage in einer schematischen perspektivischen Ansicht von unten. Im Folgenden sind die Begriffe "oben" und "unten" auf eine Ausrichtung der Kochfeldvorrichtung 10 in einem Betriebszustand bezogen. Die Kochfeldvorrichtung 10 umfasst eine Basiseinheit 12, die in dem Betriebszustand dazu vorgesehen ist, vier Heizelemente 14 zu tragen und eine Kochfeldelektronik 16 zu halten. Die Basiseinheit 12, die als ein Verbundbauteil ausgebildet ist, weist ein Basiselement 18 auf, das aus Kunststoff ausgebildet ist. Das Basiselement 18 weist sieben Verstärkungselemente 30', 30" auf, die zu einer Verstärkung des Basiselements 18 vorgesehen sind. Sechs der Verstärkungselemente 30' sind jeweils parallel zueinander sowie zu einer Basisquererstreckung 32 des Basiselements 18 ausgerichtet. Die sechs Verstärkungselemente 30' sind in zwei zueinander beabstandet angeordneten Verstärkungselementgruppen angeordnet, die jeweils drei der Verstärkungselemente 30' umfassen. Die Verstärkungselemente 30' erstrecken sich über die gesamte Basisquererstreckung 32 des Basiselements 18, deren Betrag gleich einem Betrag einer Basisquererstreckung der Basiseinheit 12 ist. Das Verstärkungselement 30" ist parallel zu einer Basislängserstreckung 34 des Basiselements 18 ausgerichtet. Die Basislängserstreckung 34 des Basiselements 18, deren Betrag einem Betrag einer Basislängserstreckung der Basiseinheit 12 entspricht, ist senkrecht zu der Basisquererstreckung 32 ausgerichtet. Die Verstärkungselemente 30', 30", die eine Verstärkungselementhöhe von 4 mm aufweisen, sind zudem dazu vorgesehen, die Kochfeldelektronik 16 zu dem Basiselement 18 zu beabstanden.

Fig. 2 zeigt die erfindungsgemäße Kochfeldvorrichtung 10, wobei ausgehend von einem in Fig. 1 gezeigten Zustand die Kochfeldelektronik 16 an der Basiseinheit 12 montiert ist. Im vorliegenden Ausführungsbeispiel ist die Kochfeldelektronik 16 an das Basiselement 18 angeklemmt. Alternativ könnte die Kochfeldelektronik 16 an das Basiselement 18 angeschraubt sein. Die Kochfeldelektronik 16 umfasst eine Gebläseeinheit 36, eine Kühlkörpereinheit 38 sowie zwei Elektronikplatinen 40. Die Elektronikplatinen 40 sind an dem Basiselement 18 befestigt, wobei jeweils eine der Elektronikplatinen 40 an jeweils einer der Verstärkungselementgruppen befestigt ist. Die Kühlkörpereinheit 38 umfasst zwei Kühlkörper, die jeweils an einer der Elektronikplatinen 40 angeschraubt sind. Die Gebläseeinheit 36 ist direkt an dem Basiselement 18 befestigt.

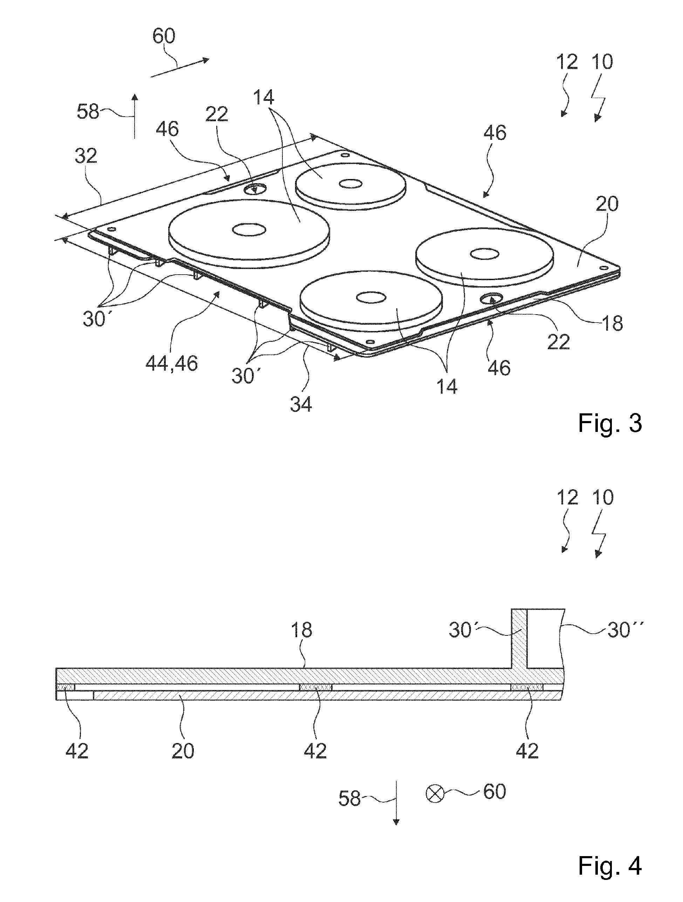

Fig. 3 zeigt die erfindungsgemäße Kochfeldvorrichtung 10 in einem weiteren Zustand während der Montage in einer schematischen perspektivischen Ansicht von oben. In einem Vergleich zu Fig. 2 sind die Heizelemente 14 an der Basiseinheit 12 montiert. Die Basiseinheit 12 weist ein weiteres Basiselement 20 auf, das als ein Schirmelement und als ein Trägerelement ausgebildet ist. Das weitere Basiselement 20 ist als ein Aluminiumblech ausgebildet. Das Basiselement 18 und das weitere Basiselement 20 sind in dem Betriebszustand zueinander beabstandet (vgl. Fig. 4). Die Kochfeldvorrichtung 10 weist mehrere Abstandselemente 42 auf, die dazu vorgesehen sind, das Basiselement 18 und das weitere Basiselement 20 in einem definierten Abstand zueinander zu beabstanden. Der Abstand beträgt 1 mm. Die Abstandselemente 42 sind als parallel ausgerichtete Stege ausgebildet. Die Abstandselemente 42 sind an dem Basiselement 18 angeordnet. Das Basiselement 18 und das weitere Basiselement 20 sind in dem Betriebszustand aneinander befestigt. Die Abstandselemente 42 sind als Silikonkleber ausgebildet und dazu vorgesehen, das Basiselement 18 und das weitere Basiselement 20 aneinander zu befestigen.

Die Kochfeldvorrichtung 10 umfasst die vier Heizelemente 14, die jeweils als Induktionsheizelemente ausgebildet sind. Die Heizelemente 14 weisen eine runde Querschnittsfläche auf, wobei die Heizelemente 14 verschiedene Durchmesser aufweisen. In dem Betriebszustand sind die Heizelemente 14 an dem weiteren Basiselement 20 befestigt. Jeweils zwei der Heizelemente 14 sind oberhalb einer Verstärkungselementgruppe angeordnet. Somit sind die Verstärkungselemente 30', 30" dazu vorgesehen, einen Bereich der Heizelemente 14 zu stabilisieren. Das weitere Basiselement 20 ist zwischen den Heizelementen 14 und dem Basiselement 18 angeordnet. Das weitere als das Schirmelement ausgebildete Basiselement 20 ist dazu vorgesehen, die Kochfeldelektronik 16 gegen elektromagnetische Strahlung und gegen Wärmestrahlung abzuschirmen. Zudem ist das weitere Basiselement 20 zu einer Stabilisierung des Basiselements 18 vorgesehen.

Die Basiseinheit 12 weist in einem in dem Betriebszustand als ein Frontbereich ausgebildeten Bereich eine Basiseinbuchtung 44 auf, die sich über einen Großteil der Basislängserstreckung der Basiseinheit 12 erstreckt. Das weitere Basiselement 20 weist insgesamt vier Basiselementeinbuchtungen 46 auf, wobei an jeder von vier Seitenkanten des weiteren Basiselements 20 jeweils mittig eine der Basiselementeinbuchtungen 46 angeordnet ist. Die jeweiligen Basiselementeinbuchtungen 46 sind einander gegenüberliegend angeordnet. Das Basiselement 18 sowie das weitere Basiselement 20 sind jeweils nahezu als Rechtecke ausgebildet, wobei die Rechtecke jeweils abgerundete Ecken aufweisen.

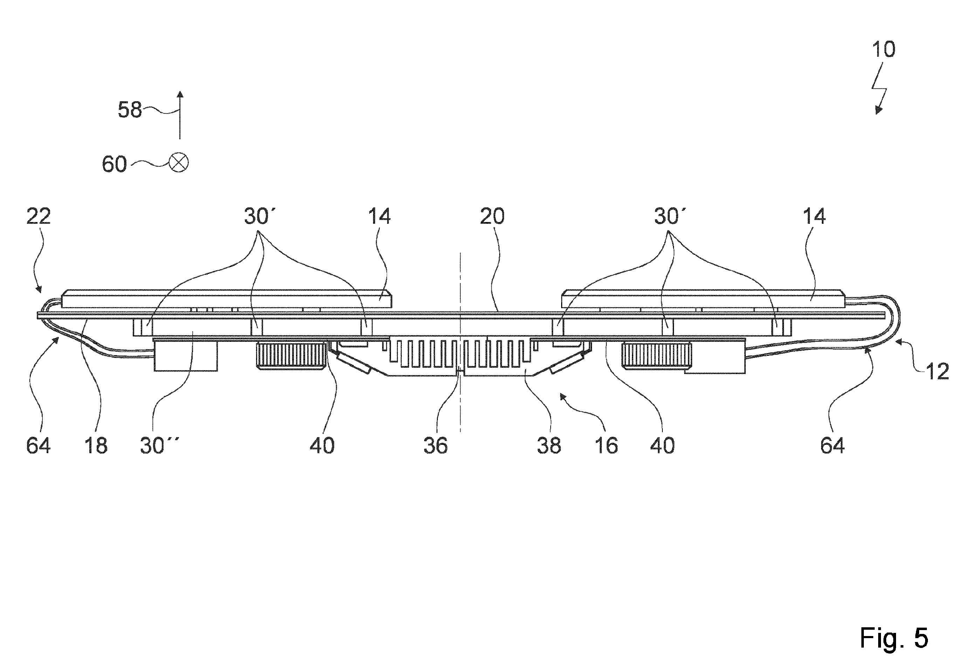

Die Basiseinheit 12 weist zwei Verbundbauteilausnehmungen 22 auf, die dazu vorgesehen sind, eine elektrische Kontaktierung der Heizelemente 14 und der Kochfeldelektronik 16 zu ermöglichen. Die Verbundbauteilausnehmungen 22 sind an zwei einander bezüglich der Basislängserstreckung der Basiseinheit 12 gegenüberliegender Seiten der Basiseinheit 12 angeordnet. Zudem sind die Verbundbauteilausnehmungen 22 bezüglich der Basisquererstreckung der Basiseinheit 12 mittig in der Basiseinheit 12 angeordnet. Die Verbundbauteilausnehmungen 22 sind jeweils als ein kreisrundes Loch in der Basiseinheit 12 ausgebildet. Die Kochfeldvorrichtung 10 umfasst mehrere Leitungselemente 64, die zu einer elektrischen Kontaktierung der Heizelemente 14 und der Kochfeldelektronik 16 vorgesehen sind. Die Leitungselemente 64 sind jeweils als ein Draht ausgebildet. Fig. 5 zeigt die Kochfeldvorrichtung 10 in einem weiteren Zustand, der während der Montage der Kochfeldvorrichtung 10 auf den in Fig. 3 gezeigten Zustand folgt. Fig. 5 zeigt zwei verschiedene Varianten einer elektrischen Kontaktierung, wobei auf einer linken Seite der Fig. 5 die soeben beschriebene Kontaktierung mittels der Verbundbauteilausnehmungen 22 dargestellt ist. Hierbei sind die Leitungselemente 64 durch die Verbundbauteilausnehmung 22 geführt. Auf einer rechten Seite der Fig. 5 ist eine alternative Variante dargestellt. Hierbei erfolgt eine elektrische Kontaktierung um die Basiseinheit 12 herum und die Leitungselemente 64 sind um die Basiseinheit 12 herumgeführt.

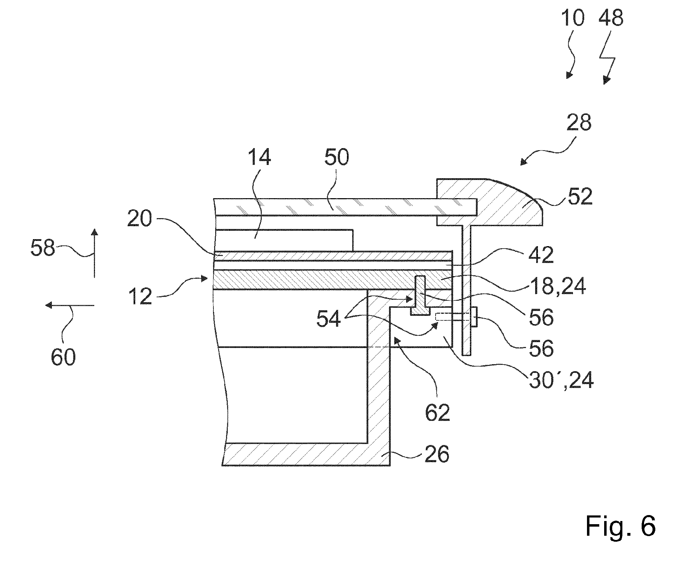

Fig. 6 zeigt einen Schnitt durch die Linie VI-VI aus Fig. 1, wobei in einem Unterschied zu Fig. 1 ein fertig montiertes Kochfeld 48 mit der fertig montierten, in einer Ausrichtung des Betriebszustands befindlichen Kochfeldvorrichtung 10 gezeigt ist. Die Kochfeldvorrichtung 10 umfasst ein Gehäuse 26, das dazu vorgesehen ist, in dem Betriebszustand die Kochfeldelektronik 16 an einer der Basiseinheit 12 entgegen einer Vertikalrichtung 58 angeordneten Seite zu bedecken. Zudem umfasst die Kochfeldvorrichtung 10 eine Kochfeldplatte 28, die in dem Betriebszustand an einer in der Vertikalrichtung 58 zu der Basiseinheit 12 beabstandeten Seite die Heizelemente 14 bedeckt. Die Kochfeldplatte 28 umfasst eine Glasplatte 50, die als eine Glaskeramikplatte ausgebildet ist, und einen Plattenrahmen 52, der aus einem Metall ausgebildet ist. In dem Betriebszustand umschließt der Plattenrahmen 52 die Glasplatte 50 vollständig, wobei die Glasplatte 50 in einer Ausnehmung des Plattenrahmens 52 befestigt ist.

Die Basiseinheit 12 weist ein Befestigungselement 24 auf, das dazu vorgesehen ist, eine separate Befestigung des Gehäuses 26 und der Kochfeldplatte 28 an der Basiseinheit 12 zu ermöglichen. Das Basiselement 18 ist als das Befestigungselement 24 ausgebildet und weist mehrere Befestigungsmittel 54 auf. Die Befestigungsmittel 54 sind als Löcher in dem Basiselement 18 ausgebildet und zu einer Aufnahme eines zu dem Befestigungsmittel 54 korrespondierenden weiteren Befestigungsmittels 56 vorgesehen. Die weiteren Befestigungsmittel 56 sind als Schrauben ausgebildet.

Das Gehäuse 26 ist in dem Betriebszustand in der Vertikalrichtung 58 an der Basiseinheit 12 befestigt. Die Vertikalrichtung 58 ist in dem Betriebszustand senkrecht zu der Basisquererstreckung 32 und senkrecht zu der Basislängserstreckung 34 ausgerichtet. Das Gehäuse 26 ist in dem Betriebszustand mittels eines jeweiligen weiteren Befestigungsmittels 56 in der Vertikalrichtung 58 an dem Basiselement 18 befestigt. Das Gehäuse 26 weist zwölf Gehäuseausnehmungen 62 auf, die in dem Betriebszustand zu einer Aufnahme der Verstärkungselemente 30' vorgesehen sind. Von den Gehäuseausnehmungen 62 ist lediglich eine in Fig. 6 dargestellt. Die Kochfeldplatte 28 ist in dem Betriebszustand in einer Tiefenrichtung 60 an der Basiseinheit 12 befestigt. Die Tiefenrichtung 60 ist in dem Betriebszustand parallel zu der Basisquererstreckung 32 ausgerichtet. Der Plattenrahmen 52 der Kochfeldplatte 28 ist mittels eines jeweiligen weiteren Befestigungsmittels 56 an einem jeweiligen der Verstärkungselemente 30' befestigt.

In einem Verfahren zu einer Montage der erfindungsgemäßen Kochfeldvorrichtung 10 werden in einem ersten Verfahrensschritt das Basiselement 18 und das weitere Basiselement 20 aneinander montiert. Zu Beginn des Verfahrens wird zunächst die Basiseinheit 12 fertig montiert bevor weitere Verfahrensschritte zu einer Montage weiterer Bauteile folgen. In einem weiteren Verfahrensschritt werden die Heizelemente 14 und die Kochfeldelektronik 16 an der fertig montierten Basiseinheit 12 montiert. Hierbei ist eine Reihenfolge einer Montage der Heizelemente 14 und der Kochfeldelektronik 16 variabel. Nach einer Montage der Heizelemente 14 und der Kochfeldelektronik 16 an der Basiseinheit 12 werden das Gehäuse 26 und die Kochfeldplatte 28 an der Basiseinheit 12 montiert. Hierbei ist eine Reihenfolge einer Montage des Gehäuses 26 und der Kochfeldplatte 28 variabel.

### Bezugszeichen

- 10: Kochfeldvorrichtung
- 12: Basiseinheit
- 14: Heizelement
- 16: Kochfeldelektronik
- 18: Basiselement
- 20: Weiteres Basiselement
- 22: Verbundbauteilausnehmung
- 24: Befestigungselement
- 26: Gehäuse
- 28: Kochfeldplatte
- 30: Verstärkungselement
- 32: Basisquererstreckung
- 34: Basislängserstreckung
- 36: Gebläseeinheit
- 38: Kühlkörpereinheit
- 40: Elektronikplatine
- 42: Abstandselement
- 44: Basiseinbuchtung
- 46: Basiselementeinbuchtung
- 48: Kochfeld
- 50: Glasplatte
- 52: Plattenrahmen
- 54: Befestigungsmittel
- 56: Weiteres Befestigungsmittel
- 58: Vertikalrichtung
- 60: Tiefenrichtung
- 62: Gehäuseausnehmung
- 64: Leitungselement

## Patentansprüche

1. Kochfeldvorrichtung, insbesondere Induktionskochfeldvorrichtung, mit zumindest einer Basiseinheit (12), die in zumindest einem Betriebszustand dazu vorgesehen ist, zumindest ein Heizelement (14) zu tragen und zumindest eine Kochfeldelektronik (16) zu halten, **dadurch gekennzeichnet, dass** die Basiseinheit (12) als ein Verbundbauteil ausgebildet ist.

2. Kochfeldvorrichtung nach Anspruch 1, **dadurch gekennzeichnet, dass** die Basiseinheit (12) zumindest ein Basiselement (18) aufweist, das zumindest teilweise aus Kunststoff ausgebildet ist.

3. Kochfeldvorrichtung nach einem der vorhergehenden Ansprüche, **dadurch gekennzeichnet, dass** die Basiseinheit (12) zumindest ein weiteres Basiselement (20) aufweist, das zumindest teilweise als ein Schirmelement ausgebildet ist.

4. Kochfeldvorrichtung nach Anspruch 2 und 3, **dadurch gekennzeichnet, dass** das Basiselement (18) und das weitere Basiselement (20) in dem Betriebszustand zueinander beabstandet sind.

5. Kochfeldvorrichtung nach einem der vorhergehenden Ansprüche, **dadurch gekennzeichnet, dass** die Basiseinheit (12) zumindest eine Verbundbauteilausnehmung (22) aufweist, die dazu vorgesehen ist, eine elektrische Kontaktierung des Heizelements (14) und der Kochfeldelektronik (16) zu ermöglichen.

6. Kochfeldvorrichtung nach einem der vorhergehenden Ansprüche, **dadurch gekennzeichnet, dass** die Basiseinheit (12) zumindest ein Befestigungselement (24) aufweist, das dazu vorgesehen ist, eine separate Befestigung zumindest eines Gehäuses (26) und zumindest einer Kochfeldplatte (28) an der Basiseinheit (12) zu ermöglichen.

7. Verfahren zu einer Montage einer Kochfeldvorrichtung (10) nach einem der Ansprüche 1 bis 6.

8. Verfahren nach Anspruch 7, **dadurch gekennzeichnet, dass** in einem ersten Verfahrensschritt das Basiselement (18) und das weitere Basiselement (20) aneinander montiert werden.

9. Verfahren nach Anspruch 8, **dadurch gekennzeichnet, dass** in einem weiteren Verfahrensschritt das Heizelement (14) und/oder die Kochfeldelektronik (16) an der Basiseinheit (12) montiert werden.

10. Verfahren nach Anspruch 9, **dadurch gekennzeichnet, dass** nach einer Montage des Heizelements (14) und der Kochfeldelektronik (16) an der Basiseinheit (12) das Gehäuse (26) und die Kochfeldplatte (28) an der Basiseinheit (12) montiert werden.
